# EUROPÄISCHE PATENTSCHRIFT

(11) **EP 0 427 034 B1**
(45) Veröffentlichungstag und Bekanntmachung des Hinweises auf die Patenterteilung: **14.12.1994**
(21) Anmeldenummer: 90120175.6
(22) Anmeldetag: 20.10.1990
(51) Int. Cl.: H04N 5/64, H04N 5/655

(54) **Schaltungschassis für ein Fernsehempfangsgerät**
Circuit chassis for a television receiver
Chassis de circuit pour un récepteur de télévision

(30) Priorität: 10.11.1989 DE 3937415
(43) Veröffentlichungstag der Anmeldung: 15.05.1991
(73) Patentinhaber: LOEWE OPTA GMBH, 96305 Kronach (DE)
(72) Erfinder: Kraus, Heinz, Dipl.-Ing., W-8043 Küps-Theisenort (DE); Müller, Heinrich, Dipl.-Ing., W-8641 Wilhelmsthal-Steinberg (DE)

(56) Entgegenhaltungen:
- US-A- 4 644 408
- FUNKSCHAU, Heft 23, 1987, Seiten 57-60, München, DE; "Service im Wandel"

## Beschreibung

Die Erfindung betrifft ein Schaltungschassis für ein Fernsehempfangsgerät mit einem Rahmen, an dem eine elektronische Bauelemente, Kühlbleche, Transformatoren, Tuner, ZF-Verstärker und andere Baugruppen tragende Leiterplatte befestigt ist, welches Schaltungschassis in ein Gehäuse des Fernsehempfängers eingesetzt ist, wobei rückseitig am Chassis Steckverbindungselemente für periphere Anschlüsse vorgesehen sind, die durch die Rückwand des Gerätes zugänglich sind.

Ein solches Schaltungschassis ist aus der DE-C- 32 13 485 bekannt. Bei diesem sind an dem Rahmen Schiebehalter vorgesehen, in die Kühlbleche einschiebbar sind, die mittels Rastverbinder gehalten sind. Diese Kühlbleche unterstützen die Stabilität des Rahmens. Ein solches Chassis ist üblicherweise unterhalb der Bildröhre in dem Fernsehempfangsgerätegehäuse angeordnet und am Träger befestigt, wobei durch die Rückwand hindurch die aus dem Chassis hervorstehenden Steckverbindungselemente für periphere Anschlüsse, z.B. Antennenanschluß, hervorstehen.

Ein Chassis der angegebenen Art ist weiterhin aus der Fachzeitschrift "Funkschau", Heft 23/1987, Seite 57, bekannt, bei dem auf einer Grundplatine die Bauelemente der Leistungselektronik und der digitalen Signalverarbeitungsschaltung, Tuner und ZF-Verstärker aufgebracht sind. Es handelt sich dabei um ein sogenanntes Einplatinenchassis, das rückseitig ein durchgehendes senkrechtstehendes Kühlblech aufweist, an dem die hohe Verlustleistung aufweisenden Bauelemente, wie Transistoren der Ablenkschaltung, befestigt sind. Dieses Kühlblech dient zugleich als Verstärkungselement des Chassisrahmens und zur Stabilität des Chassis. Parallel senkrechtstehend zu dem Kühlblech ist eine Modulplatine eingesetzt, auf der mit dem Kühlblech endende Peritelevisionsstecker angeordnet sind, die durch Durchbrüche in dem Kühlblech zugänglich sind. Die Modulplatine ist in dem Bereich des Einplatinenchassis senkrechtstehend angeordnet, in dem die Bauelemente für die digitale Signalsverarbeitung der Bildsignale auf dem Chassis aufgebracht sind. Eine Abschirmung des Chassisteils und eine Abschirmung der Modulplatine sind nicht vorgesehen. Der Anschluß der Bildröhre erfolgt über relativ lange Signalleitungswege, die sich sowohl durch das Chassis erstrecken als auch über die Modulleiterplatte und das daran angeschlossene Verbindungskabel. Weiterhin ist eine Trennung des Signalverarbeitungsteils von dem Leistungselektronikteil nicht möglich. Die Stromversorgungen müssen über weite Stromzuführungswege zugeführt werden.

Aus der US-A- 4 644 408 ist ein Fernsehgerätechassis in Form eines Einplatinenchassis ebenfalls bekannt. Dieses Chassis besteht aus einem kastenförmigen Chassisrahmen, in dem das Chassis liegend befestigt ist. An der Rückseite des Chassis ist senkrecht zum Chassis verlaufend ein sich über die Gesamtlänge des Chassis erstreckender Aufsatzteil mit Durchlaßöffnung vorgesehen. Dieser Teil beinhaltet keine Leiterplatte. Es handelt sich dabei vielmehr um eine Abdeckung, durch die hindurch Einstellelemente von Bauteilen, -die auf der Chassisplatine aufgebracht sind, sowie Anschlußbuchsen zugänglich sind.

Der Erfindung liegt die Aufgabe zugrunde, einen neuen Chassisaufbau für ein Fernsehempfangsgerät zu entwickeln, bei dem die Bildsignalverarbeitungsschaltungen von der Leistungselektronik und den übrigen Schaltungen des Gerätes getrennt sind, andererseits aber in räumlicher Nähe angeordnet sind, ohne daß lange Leitungsführungen und mit besonderer Abschirmung versehene HF-Signal-Leitungen erforderlich sind.

Weiterhin soll eine kurze Leitungsverbindung zwischen dem ZF-Verstärker, dem Tuner und dem Demodulator zu den Signalverknüpfungs- und Interfaceschaltungen für das Bildsignal gegeben sein, um die Einkopplung von Störungen vom Gerät selbst oder von außen zu vermeiden. Darüber hinaus soll durch den Aufbau die Voraussetzung für eine schleifenlose Stromversorgung der einzelnen Bauteile gegeben sein.

Gelöst wird die Aufgabe durch einen im Anspruch 1 angegebenen Aufbau des Schaltungschassis.

Nach der Lehre der Erfindung werden die gesamte Leistungselektronik und die übrigen Schaltungen, mit Ausnahme der Signalverarbeitungsschaltungen für die Bildsignale, auf dem Basischassisteil angeordnet und alle Schaltungen, die die Bildsignalverarbeitung betreffen, auf dem zweiten Chassisteil angeordnet, der im wesentlichen aus einer senkrecht zum Grundchassis angeordneten die Bauelemente tragenden gedruckten Leiterplatte besteht. Diese Leiterplatte ist in dem Bereich, in dem die Schaltungsbauteile vorgesehen sind, von einem Abschirmgehäuse umgeben, wobei je nach Ausführungsform die Abschirmung beidseitig oder einseitig der Leiterplatte angeordnet sein kann. Dies hängt davon ab, ob z.B. eine Multilayer-Leiterplatte verwendet wird, deren eine Schicht als Abschirmung mit verwendet wird, wobei nur einseitig ein Abschirmgehäuse aufgesetzt und mit den Masse führenden Leiterbahnen verbunden ist. Die Leiterplatte ist auf dem Grundchassis so angeordnet und befestigt, daß sie mit dem Abschirmgehäuse, falls dieses auf der nach außen stehenden Seite aufgebracht ist, unmittelbar hinter der Rückwand endet, so daß durch die Rückwand hindurch die Steckverbindungselemente für die peripheren Anschlüsse zugänglich sind. Diese Steckverbinder können selbstverständlich auch in entsprechenden konturenangepaßten Durchbrüchen der Rückwand enden.

Die Steckverbindungselemente sind auf einer seitlichen Verlängerung des zweiten Chassisteils aufgebracht, die über das Abschirmgehäuse hinaussteht. Die Verlängerung kann dabei sowohl links- als auch rechtsseitig angebracht werden, je nach Aufbau des Grundchassis. Auf jeden Fall müssen die Steckverbindungselemente nahe dem Demodulator, ZF-Verstärker und Tuner angeordnet sein, um die vom Demodulatorausgang anliegenden Bildsignale direkt verarbeiten zu können. Dies setzt eine kompakte Bauweise des Tuner-, ZF- und Demodulatorteils sowie ggf. eines Decoders für bestimmte Normensignale, wie D2-MAC-Signale, voraus, die dann demoduliert auf den unmittelbar benachbarten Schaltungsteil des zweiten Chassis übertragen werden, der die Steckverbindungselemente für die peripheren Anschlüsse und die Leitungsverbindungen sowie Bauelemente für die Leitungsverbindungen trägt. Entsprechend der jeweiligen Beschaltung werden die Bildsignale der Bildsignalverarbeitungsschaltung innerhalb des Abschirmgehäuses zugeführt.

Vorteilhafte Anordnungen der einzelnen Baugruppen und vorteilhafte Ausgestaltungsformen der Erfindung sind in den abhängigen Ansprüchen im einzelnen angegeben.

Es versteht sich von selbst, daß die Leiterplatte des zweiten Chassisteils in irgendeiner Form befestigt werden muß, um nicht durch mechanische Belastungen auf die Steckverbindungselemente durchgebogen werden zu können. Zu diesem Zweck empfiehlt es sich, entsprechende Haltevorrichtungen an dem Rahmen oder an dem Basischassis zu befestigen, die nach oben hervorstehen und an denen die Leiterplatte fixierbar ist. Diese Haltevorrichtungen können z.B. in Form eines Winkelprofils ausgebildet sein, das die Ecke des Basischassisteils, in der der überstehende Teil der Leiterplatte des zweiten Chassisteils sich befindet, umschließt. Dieser Eckenteil kann dann eine Abdeckung tragen, die die Leiterbahnen zwischen den Verbindungselementen abdeckt, so daß nur noch die eigentlichen Steckanschlüsse der Steckverbindungselemente aus der geschlossenen Ebene hervortreten. Hierdurch ist ein wesentlicher Vorteil gegenüber herkömmlichen Ausführungen gegeben. Es braucht dann nur noch in der Gesamtkontur der Abdeckung ein konturenangepaßter Ausschnitt in der Rückwand vorgesehen zu sein, in den die Abdeckung bündig eingreift. Die Abdeckung kann dabei unbefestigt in den Ausschnitt einmünden oder aber auch hinter dem Ausschnitt enden und z.B. mittels Schraubverbinder daran befestigt sein. Lösbare Schnappverbinder können ebenfalls zur Fixierung der Abdeckung an der Rückwand vorgesehen sein. Es ist durch diese Maßnahme möglich, beliebig viele Steckverbindungselemente aufzubringen und mittels eines einfachen Wechselwerkzeuges die Abdeckung herzustellen, ohne Wechseleinsätze bei den sehr teuren Rückwandwerkzeugen vorsehen zu müssen. Die Außenkontur der Abdeckung bleibt dabei jeweils erhalten.

Die Anordnung, bei der die gesamten Anschlußschaltungen und Interfaceschaltungen unmittelbar im Bereich der Tuner-ZF- und ggf. Decoderanordnung für D2-MAC-Signale angeordnet ist, hat den Vorteil, daß diese über besonders kurze Leitungen mit dem Tuner und dem ZF-Verstärker verbindbar sind. Ebenfalls ist eine kurze Verbindung zu dem Bildsignalverarbeitungsteil gegeben. Die Hauptverbindungen liegen zwischen den externen Anschlüssen, wie Scart-Stecker, und der Signalverarbeitungsschaltung. Um die Störstrahlung zu minimieren, ist es außerordentlich wichtig, kurze Verbindungsleitungen zwischen den Anschlußschaltungen und den Signalverarbeitungsschaltungen herzustellen. Ebenso muß das FBAS-Signal vom ZF-Verstärker auf möglichst kurzem Wege über die elektronischen Schalter der Signalverarbeitungsschaltung zugeführt werden. Dies alles ist durch die erfindungsgemäße Anordnung gewährleistet.

Das Abschirmgehäuse kann auf dem zweiten Chassisteil entweder einseitig oder doppelseitig aufgebracht werden. Dies ist abhängig von der Ausführung der Schaltungsanordnung und den verwendeten Bauteilen. In einer digitalen Signalverarbeitungsschaltung, bei der sowohl auf der einen Leiterplattenseite als auch auf der anderen Bauteile aufgebracht sind, wie Chip- und SMD-Bauteile, sieht die Erfindung vor, daß die Leiterplatte vollständig in dem Bereich der Signalverarbeitungsschaltungen abgekapselt ist, d.h. beidseitig das Abschirmgehäuse diesen umschließt. Das Abschirmgehäuse kann dabei aus gelochtem Blech bestehen oder mit Schlitzen versehen sein., die aber keine Antennenwirkung haben dürfen. Die Öffnungen dienen zur besseren Belüftung der elektronischen Bauteile auf der Schaltungsplatine. Es empfielt sich, insbesondere solche Belüftungsöffnungen auf der der Rückwand zugewandten Seite vorzusehen und unterhalb derer in der Rückwand Belüftungsschlitze einzubringen, damit die Luft durch die Kaminwirkung nach oben an den Bauteilen vorbei strömt. Die Abschirmung kann zugleich Teil von Kühlblechen sein oder an ihr können Kühlbleche anliegen. Diese wirken allein oder aber auch das Gehäuse wirkt als Verstärkungsrahmen der Schaltungsplatine, da sie mit dieser über die Massepotential führenden Leiterbahnen verbunden sind und in der Kastenform eine hohe Durchbiegungssteifigkeit bieten.

Die Kontaktierung der einzelnen Leiterbahnen des zweiten Chassisteils mit den Leiterbahnen auf der Leiterplatte des Basischassisteils kann auf mannigfaltige Art und Weise vorgenommen werden. Zweckmäßigerweise sind hierfür Steckverbindungselemente vorgesehen. Zu diesem Zweck können die als Steckkontakte ausgeführten Leiterbahnenden an der Unterseite der Leiterplatte des zweiten Chassisteils in einen Steckverbinder in der Grundplatine eingesetzt werden. Ebenso können aber auch Stifte an die Leiterbahnenden der Leiterplatte des zweiten Chassis angeschlagen sein, die in Aufnahmebohrungen in der Grundplatte eingesetzt sind und dort an der Unterseite an Lötstützpunkte angelötet werden.

Das zweite Chassisteil muß nicht unbedingt senkrecht zur Grundplatine angeordnet werden. Er kann auch in einem Winkel angebracht sein, wenn aus designtechnischen Gründen dies erforderlich ist und die Lage dem Verlauf der Rückwand angepaßt werden muß. Die Winkelanordnung sollte aber nur in einem beschränkten Umfang ermöglicht werden, um noch eine gewisse Kaminwirkung durch die Schrägstellung für die Luftzirkulation zur Abführung der Wärme in dem zweiten Chassisteil zu bewirken. Üblicherweise werden die beiden Platinen jedoch senkrecht zueinander im rechten Winkel angeordnet. Die gewählte Anordnung hat auch Servicevorteile. So kann z.B. die Außenfläche des Abschirmgehäuses zugleich die Standfläche des Chassis für Reparaturen bilden, wenn diese im Leistungsteil erforderlich sind. Es braucht in dem Fernsehgerätegehäuse keine Vorrichtung geschaffen zu werden, um das Chassis in eine Reparaturstellung bringen zu können. Das Chassis kann vielmehr auf einer Tischplatte senkrecht auf die Vorderseite des Abschirmgehäuses aufgestellt werden, so daß die Lötstützpunkte der Bauteile auf der Grundplatine zugänglich sind. Andererseits können aber auch die auf der Leiterplatte des zweiten Chassisteils angeordneten Bauelemente leicht ausgetauscht werden, wenn diese in Stecksockeln angebracht sind, z.B. digitale Signalverarbeitungs-IC's, und wenn dafür Sorge getragen wird, daß die Rückseite des Abschirmgehäuses in Form eines Deckels abnehmbar ist.

Weiterhin gestattet die Verwendung von Steckverbindern zwischen der Grundplatine und dem zweiten Chassisteil, daß der zweite Chassisteil leicht austauschbar und wechselbar ist. Auch dies ist für den Service von Vorteil. Darüber hinaus ist es möglich, mit ein und demselben Grundchassis eine digitale oder eine analoge Signalverarbeitungsschaltung für die Bildsignale zu koppeln. Die Schnittstellen sind dabei so zu wählen, daß sowohl eine analoge als auch digitale Signalverarbeitungsschaltung eingesetzt werden kann.

Weiterhin ist vorgesehen, daß bei Verwendung eines Rahmens aus Metall dieser masseführend an den entsprechenden Leiterbahnen der Grundplatine über Schränklappen angelötet oder befestigt ist. Überstehende Randteile können dabei gleichzeitig zur Gleitlagerung verwendet werden.

In weiterer Ausgestaltung ist eine besondere Placierung der Schaltungsgruppen auf dem Grundchassis in Verbindung mit dem zweiten Chassisteil vorgesehen, die einen kupplungsfreien Aufbau der einzelnen Schaltungsstufen ermöglicht. Der Aufbau ist im Anspruch 9 im einzelnen angegeben und zeichnet sich dadurch aus, daß die Sekundärausgänge des Schaltnetzteils sternförmig verlaufen, und daß hierüber die einzelnen Baugruppen mit Strom versorgt werden. Es ist somit eine schleifenlose Stromversorgung gegeben und die einzelnen Schaltungsstufen sind voneinander entkoppelt, so daß Störungseinflüsse weitestgehend vermieden werden. Die Leistungselektronik und die Digitalelektronik sind dabei nahezu konzentrisch oder strahlförmig von einem im Zentrum der Grundplatine angeordneten Netzteil angebunden. Die Stromspannungsschaltungsstufen werden nicht nacheinander von den einzelnen Sekundärkreisen mit Strom versorgt, so daß auch eine Stromverkopplung zwischen den Baugruppen nicht besteht. Es versteht sich von selbst, daß in gleicher Weise eine sternförmige Masseverbindung zu den einzelnen Schaltungen analog herzustellen ist und diese auf das zentrale Schaltnetzteil zurückgeführt wird.

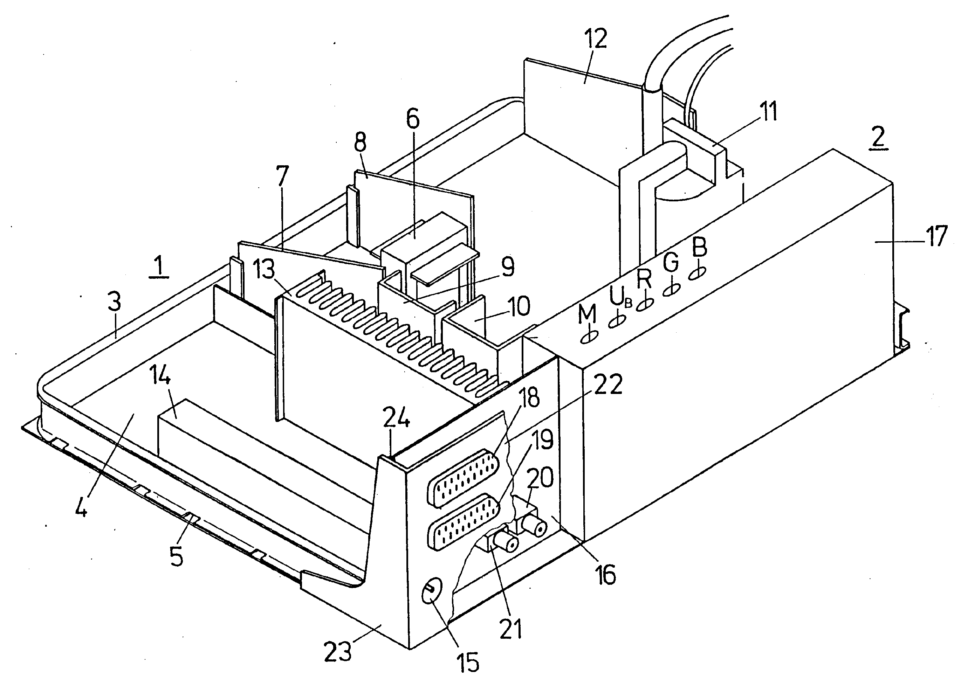

Die Erfindung wird nachfolgend anhand des in der Figur dargestellten Ausführungsbeispiels näher erläutert.

In der einzigen Figur ist schematisch ein Chassis nach der Erfindung dargestellt. Dieses Chassis besteht aus einem Basischassisteil 1 und einem zweiten oder Sekundär-Chassisteil 2, der senkrecht zum Basischassisteil an der Rückseite angeordnet ist. An einem Rahmen 3 des Basischassisteils 1 ist eine Leiterplatte 4 befestigt, z.B. mittels nicht sichtbarer nach unten abgebogener Schränklappen 5, die aus den U-förmigen Ausnehmungen des Randes des Rahmens 3 nach unten abgewinkelt hervorstehen. Diese Schränklappen 5 werden umgelegt und an der Leiterplatte 4 an der Unterseite mit angelötet oder nur umgelegt. Auf der Leiterplatte 4 sind zentrisch ein Netzteil mit einem Netztransformator 6 angeordnet, weiterhin die zum Schaltnetzteil gehörenden Bauelemente. Zu sehen sind lediglich verschiedene Kühlbleche 7, 8, 9, 10, an denen Leistungselektronikbauelemente, wie Transistoren, die dem Schaltnetzteil zugeordnet sind, befestigt sind. Ausgehend von dieser zentralen Lage ist rechts davon der Ablenkgenerator mit dem Zeilentransformator 11 angeordnet, weiterhin ein Kühlblech 12, das an dem Rahmen 3 befestigt ist. Dieses Kühlblech ist z.B. für die Endtransistoren der Horizontal- und Vertikalablenkschaltungen vorgesehen. Auf der anderen Seite ist der Ton-NF-Verstärker vorgesehen, der einen überdimensionierten Kühlkörper 13 aufweist, um die hohe Verlustwärme bei den geforderten hohen NF-Leistungen abführen zu können. Davor befindet sich, symbolisch und verkleinert dargestellt, eine Tuner-ZF-Kombination 14, die für verschiedene Fernsehnormen ausgelegt sein kann. Der Antenneneingang (HF-Anschluß) 15 ist von der Rückseite her zu sehen.

Die Leiterbahnen für die Stromversorgung sind vom zentrischen Schaltnetzteil sternförmig herausgeführt. U.a. gehen auch die Stromversorgungsleitungen und Masseführungen sternförmig über einen gesonderten Zweig zu der Leiterplatte 16 des zweiten Chassisteils 2. Innerhalb des Abschirmgehäuses 17, das die Leiterplatte 16 beidseitig umschließt, sind die Signalverarbeitungsschaltungen für die Bildsignale untergebracht. Es kann sich hierbei um eine analoge oder aber auch um eine digitale Signalverarbeitung handeln. Auf der Oberseite sind die Durchbrüche in dem Gehäuse für die Masseleitung M, die Stromversorgungsleitung U_{B} und RGB-Leitungen vorgesehen, die direkt auf den darüber befindlichen Röhrenhalssockel der Bildröhre führen, so daß ein besonders kurzer Weg zwischen den Signalverarbeitungsschaltungen und den Videoendverstärkern, die sich in der Regel auf dem Bildröhrensockel befinden, hergestellt ist. Die Leiterplatte 16 ist über das Abschirmgehäuse 17 hinaus links verlängert und trägt in diesem Bereich zwei Scart-Anschlüsse 18 und 19, weiterhin zwei Steckverbindungsanschlüsse 20 und 21, z.B. für FBAS-Eingang und FBAS-Ausgang. Die Höhe der Steckverbindungselemente 20, 21 und die der Scart-Stecker sind so gewählt, daß sie die Höhe des Abschirmgehäuses 17 rückseitig nicht übersteigen, so daß das Abschirmgehäuse 17 die Standfläche des Gesamtchassis für den Servicefall bilden kann. Bei Überlängen kommt es zwangsläufig zu Kippeffekten, die dadurch vermieden werden. Die auf der Oberfläche der Leiterplatte 16 sichtbaren Leiterbahnen und Bauelemente werden von der Abdeckung 22 abgedeckt, die auszugsweise dargestellt ist. Diese Abdeckung ist Bestandteil eines Winkelhalters 23, der sich mit einem Teil in Längsrichtung des Rahmens 3 erstreckt und an diesem bzw. der Grundplatine 4 befestigt ist. In dem Winkelrahmenteil sind Befestigungselemente 24 vorgesehen, die die Leiterplatte 16 in der dargestellten Position fixieren. Die Abdeckung 22 ist so groß gewählt, daß alle angebrachten Steckverbindungselemente umschlossen werden. Die Form ist dem Ausschnitt in der Rückwand angepaßt, so daß die Abdeckung entweder hinter dem Ausschnitt endet oder bei entsprechender Ausbildung in diesen bündig eingreift. Durch Verwendung eines Wechselwerkzeuges ist die Abdeckung 22 der beliebigen Belegung mit Steckverbindern für die peripheren Anschlüsse anpaßbar. Der Rahmen 3 im dargestellten Ausführungsbeispiel ist nach hinten geöffnet. Die Querverbindung wird durch den zweiten Chassisteil 2 hergestellt. Es ist ersichtlich, daß alle Steckverbinder von der Rückwand her gesehen zugänglich sind und daß der zweite Chassisteil 2 bei Verwendung von Steckverbindern zur Grundplatine hin leicht entfernbar und austauschbar ist. So ist es möglich, bei einem Fehler im Signalverarbeitungsteil das Fernsehgerät sofort wieder funktionsfähig zu machen, indem nur dieser Teil ausgetauscht wird und nicht das Gesamtchassis. Andererseits ist es aber auch möglich, unter Ausnutzung des Abschirmgehäuses 17 das Chassis durch Aufstellen auf einen Tisch in eine Reparaturstellung bringen zu können, ohne daß hierfür gesonderte Servicehalter im Fernsehempfängergehäuse vorgesehen sein müssen.

## Patentansprüche

1. Schaltungschassis für ein Fernsehempfangsgerät mit einem Rahmen, an dem eine elektronische Bauelemente, Kühlbleche, Transformatoren, Tuner, ZF-Verstärker und andere Baugruppen tragende Leiterplatte befestigt ist, welches Schaltungschassis in das Gehäuse des Fernsehempfängers eingesetzt ist, und
Steckverbindungselemente zum Anschluß für periphere Geräte vorgesehen sind, die durch die Rückwand des Gerätes zugänglich sind, **dadurch gekennzeichnet**, daß das Schaltungschassis aus einem Basischassisteil (1) mit einer Leiterplatte (4) und einem Rahmen (3) und einem mit dem Basisteil (1) verbundenen zweiten Chassisteil (2) besteht,
daß auf der Leiterplatte (4) des Basischassisteils (1) alle Bauelemente der Leistungselektronik, wie Netzteil (6, 7, 8, 9, 10), Ablenkgenerator (11, 12), Tuner und Zwischenfrequenzverstärker (14) und NF-Verstärker (13) für Bild und Ton, angeordnet sind,
daß der zweite Chassisteil (2) eine zur Tiefenachse des Basischassisteils (1) querverlaufend angeordnete gedruckte Leiterplatte (16) aufweist, die hinter der Rückwand elektrisch kontaktiert an der Rückseite des Basischassisteils (1) stehend befestigt ist,
daß auf der Leiterplatte des zweiten Chassisteils (2) die Schaltungselemente einer digitalen oder analogen Signalverarbeitung für Bildsignale angeordnet sind, die von einem Abschirmungsgehäuse (17) umgeben sind, und daß die Leiterplatte des zweiten Chassisteils über das Abschirmungsgehäuse (17) hinaus seitlich vorsteht und auf dieser die Steckverbindungselemente (18, 19, 20, 21) für den Anschluß der peripheren Geräte vorgesehen sind.

2. Schaltungschassis nach Anspruch 1, dadurch gekennzeichnet, daß an der unteren Schmalseite der Leiterplatte (16) des zweiten Chassisteils (2) Steckverbindungselemente angeordnet sind, die in Gegenkupplungsstücke an dem Basischassisteil (1) eingesetzt sind.

3. Schaltungschassis nach Anspruch 1, dadurch gekennzeichnet, daß die Steckverbindungselemente (18,19,20,21) für die Anschlüsse der peripheren Geräte eine Höhe zur Ebene der zweiten Leiterplatte aufweisen, die niedriger ist als die Höhe des Abschirmungsgehäuses (17) an der Rückseite des zweiten Chassisteils (2) .

4. Schaltungschassis nach einem der vorhergehenden Ansprüche, dadurch gekennzeichnet, daß der Basischassisteil einen Rahmen aufweist, der an der Rückseite ausgeschnitten oder querverlaufend rückversetzt ist, derart, daß der zweite Chassisteil mit dem Abschirmungsgehäuse auf dem Basischassisteil aufsetzbar ist, und daß an dem Basischassisteil oder dem Rahmen Halter befestigt sind, in denen die Leiterplatte des zweiten Chassisteils fixiert ist.

5. Schaltungschassis nach einem der vorhergehenden Ansprüche, dadurch gekennzeichnet, daß die die Steckverbindungselemente (18,19,20,21) für die peripheren Geräte umgebenden Leiterbahnen von einer Abdeckung (22) mit Durchbrüchen, die der äußeren Konturenform dieser Steckverbindungselemente (18,19,20,21) angepaßt sind, abgedeckt sind, und daß die Distanz der Abdeckung zur Leiterplatte (16) so gewählt ist, daß die Abdeckung (22) in einen konturenangepaßten Ausschnitt der Rückwand bündig eingreift oder an diesem an der Innenseite anliegt.

6. Schaltungschassis nach Anspruch 5, dadurch gekennzeichnet, daß die Abdeckung (22) Bestandteil eines Halters (23) für die Leiterplatte (4) des Basischassisteils (1) und an dem Basischassisteil (1) oder dem Rahmen (3) befestigt ist.

7. Schaltungschassis nach einem der vorhergehenden Ansprüche, dadurch gekennzeichnet, daß die relativ hohe elektrische Verlustleistungen aufweisenden Schaltungsbauelemente im digitale oder analoge Bildsignale verarbeitenden zweiten Chassisteil auf der der Rückwand des Fernsehgerätes zugewandten Außenseite der Leiterplatte (16) des zweiten Chassisteils (2) aufgebracht sind, und daß das Abschirmungsgehäuse an der Rückseite Belüftungsschlitze aufweist oder aus gelochtem Blech besteht.

8. Schaltungschassis nach einem der vorhergehenden Ansprüche, dadurch gekennzeichnet, daß die RGB-Steuerleitungen zu dem Bildröhrensockel der Bildröhre an der Oberseite des zweiten Chassisteils herausgeführt und besonders kurz ausgebildet sind.

9. Schaltungschassis nach einem der vorhergehenden Ansprüche, dadurch gekennzeichnet, daß in der Mitte des Basischassis das Netzteil des Fernsehempfangsgerätes angeordnet ist, daß rechts oder links davon die Ablenkschaltungen und entgegengesetzt hierzu auf der anderen Seite der Tuner, ZF-Verstärker und die Tonendstufen vorgesehen sind, und daß die Strom und Massepotential führenden Leiterbahnen zu den genannten Baugruppen, einschließlich der Schaltungen in dem zweiten Chassisteil, schleifenlos sternförmig herausgeführt sind.

10. Schaltungschassis nach einem der vorhergehenden Ansprüche, dadurch gekennzeichnet, daß der Basischassisteil horizontal unterhalb oder vertikal neben der Bildröhre im Gehäuse angeordnet ist und der zweite Chassisteil senkrecht hierzu in Richtung des Bildröhrenhalses hervorstehend angeordnet ist.

## Claims

1. Circuit chassis for a television receiver with a frame, at which a printed circuit board is fastened, which carries electronic components, metal cooling plates, transformers, tuner, intermediate-frequency amplifier and other subassemblies, which circuit chassis is inserted into the housing of the television receiver, and plug connector elements for the connection of peripheral devices which are accessible through the rear wall of the receiver, characterised thereby, that the circuit chassis consists of a base chassis part (1) with a printed circuit board (4) and a frame (3) and of a second chassis part (2) connected with the base part (1),
that all components of the electronic power system, such as mains unit (6, 7, 8, 9, 10), deflection generator (11, 12), tuner and the intermediate-frequency amplifier (14) and the low-frequency amplifier (13) for picture and sound, are arranged on the printed circuit board (4) of the base chassis part (1),
that the second chassis part (2) displays a printed circuit board (16), which is arranged to extend transversely to the depth axis of the base chassis part (1) and is fastened vertically at the rear side of the base chassis part (1) with electrical contact made behind the rear wall,
that the circuit elements of a digital or analog signal-processing unit for picture signals, which are surrounded by a screening box (17), are arranged on the printed circuit board of the second chassis part (2) and that the printed circuit board of the second chassis part (2) projects laterally beyond the screening box (17) and the plug connector elements (18, 19, 20, 21) for the connection of the peripheral devices are provided on this.

2. Circuit chassis according to claim 1, characterised thereby, that plug connector elements, which are inserted into countercoupling members at the base chassis part (1) are arranged at the lower narrow side of the printed circuit board (16) of the second chassis part (2).

3. Circuit chassis according to claim 1, characterised thereby, that the plug connector elements (18, 19, 20, 21) for the connections of the peripheral devices have relative to the plane of the second printed circuit board a height which is lower than the height of the screening box (17) at the rear side of the second chassis part (2).

4. Circuit chassis according to one of the preceding claims, characterised thereby, that the base chassis part displays a frame which is cut out at the rear side or set back in transverse extent in such a manner that the second chassis part is settable onto the base chassis part by the screening box and that mounts, in which the printed circuit board of the second chassis part is fixed, are fastened at the base chassis part or the frame.

5. Circuit chassis according to one of the preceding claims, characterised thereby, that the conductor tracks, which surround the plug connector elements (18, 19, 20, 21) for the peripheral devices, are covered by a cover (22) with passages which are matched to the external outline shape of the plug connector elements (18, 19, 20, 21) and that the distance of the cover from the printed circuit board (16) is so chosen that the cover (22) engages snugly into an outline-matched cut-out of the rear wall or lies against this at the inward side.

6. Circuit chassis according to claim 5, characterised thereby, that the cover (22) is component of a mount (23) for the printed circuit board (4) of the base chassis part (1) and fastened at the base chassis part (1) or the frame (3).

7. Circuit chassis according to one of the preceding claims, characterised thereby, that the circuit components, which display relatively high electrical dissipation losses, in the second chassis part processing digital or analog picture signals are mounted on that outward side of the printed circuit board (16) of the second chassis part (2) which faces the rear wall of the television receiver and that the screening box displays ventilation slots or consists of perforated sheet metal at the rear side.

8. Circuit chassis according to one of the preceding claims, characterised thereby, that the RGB-control lines to the picture tube socket of the picture tube are led out at the upper side of the second chassis part and are formed to be particularly short.

9. Circuit chassis according to one of the preceding claims, characterised thereby, that the mains unit of the television receiver is arranged in the middle of the base chassis, that the deflecting circuits are provided to the right or the left thereof and the tuner, the intermediate-frequency amplifier and the sound output stages are provided on the side opposite thereto and that the conductor tracks, which carry current and ground potential to the named subassemblies including the circuits in the second chassis part, are led out in star shape and free of loops.

10. Circuit chassis according to one of the preceding claims, characterised thereby, that the base chassis part is arranged horizontally below or vertically beside the picture tube in the housing and the second chassis part is arranged perpendicularly thereto to protrude in the direction of the neck of the picture tube.

## Revendications

1. Châssis de circuit pour un récepteur de télévision avec un cadre sur lequel est fixée une carte imprimée portant des composants électroniques, des ailettes de refroidissement, des transformateurs, un syntoniseur, un amplificateur FI et d'autres sous-ensembles, lequel châssis de circuit est inséré dans le logement du récepteur de télévision, et des éléments de connexion étant prévus pour le raccordement d'appareils périphériques qui sont accessibles à travers la paroi arrière de l'appareil, caractérisé en ce que le châssis de circuit se compose d'une partie de châssis de base (1) avec une carte imprimée (4) et un cadre (3) et d'une seconde partie de châssis (2) reliée à la partie de base (1),
en ce que, sur la carte imprimée (4) de la partie de châssis de base (1), on trouve tous les composants de l'électronique de puissance, tels que le bloc d'alimentation (6, 7, 8, 9, 10), le générateur de balayage (11, 12), le syntoniseur et l'amplificateur à fréquence intermédiaire (14) et l'amplificateur à basse fréquence(13) pour l'image et le son,
en ce que la seconde partie de châssis (2) présente une carte imprimée (16) disposée transversalement par rapport à l'axe de profondeur de la partie châssis de base (1), laquelle carte imprimée est fixée verticalement, en contact électrique, derrière la paroi arrière sur la face arrière de la partie châssis de base (1),
en ce que, sur la carte imprimée de la seconde partie de châssis (2), sont disposés les éléments de circuit d'un traitement, numérique ou analogique, des signaux image, lesquels éléments sont entourés d'un logement de blindage (17), en ce que la carte imprimée de la seconde partie de châssis fait saillie latéralement au-delà du logement de blindage (17) et en ce que, sur cette carte imprimée, sont prévus les éléments de connexion (18, 19, 20, 21) pour le raccordement des appareils périphériques.

2. Châssis de circuit selon la revendication 1, caractérisé en ce que, sur le côté étroit inférieur de la carte imprimée (16) de la seconde partie châssis (2), sont disposés des éléments de connexion qui sont insérés dans les pièces de contre-accouplement sur la partie châssis de base (1).

3. Châssis de circuit selon la revendication 1, caractérisé en ce que les éléments de connexion (18, 19, 20, 21) pour les raccordements des appareils périphériques présentent, par rapport au plan de la seconde carte imprimée, une hauteur qui est inférieure à la hauteur du logement de blindage (17) sur la face arrière de la seconde partie de châssis (2).

4. Châssis de circuit selon l'une des revendications précédentes, caractérisé en ce que la partie de châssis de base présente un cadre qui est découpé sur la face arrière ou qui est ramené en arrière en oblique de telle façon que la seconde partie de châssis peut être mise en place avec le logement de blindage sur la partie de châssis de base et en ce que, sur la partie de châssis de base ou sur le cadre, sont fixés des éléments de retenue dans lesquels est fixée la carte imprimée de la seconde partie de châssis.

5. Châssis de circuit selon l'une des revendications précédentes, caractérisé en ce que les pistes conductrices entourant les éléments de connexion (18, 19, 20, 21) des appareils périphériques sont recouvertes par un recouvrement (22) muni de traversées qui sont adaptées au contour de ces éléments de connexion (18, 19, 20, 21) et en ce que la distance entre le recouvrement et la carte imprimée (10) est sélectionnée de façon à ce que le recouvrement (22) pénètre en affleurement dans une découpe, adaptée au contour, de la paroi arrière ou bien vienne appuyer sur cette découpe, sur la partie inférieure.

6. Châssis de circuit selon la revendication 5, caractérisé en ce que le recouvrement (22) fait partie d'un élément de retenue (23) de la carte imprimée (4) de la partie châssis de base (1) et est fixé sur la partie châssis de base (1) ou sur le cadre (3).

7. Châssis de circuit selon l'une des revendications précédentes, caractérisé en ce que les composants de circuit présentant des dissipations de puissance relativement importantes, dans la seconde partie de châssis traitant les signaux image numériques ou analogiques, sont logés sur la face extérieure de la carte imprimée (16) de la seconde partie de châssis (2) qui est tournée vers la paroi arrière de l'appareil de télévision et en ce que le logement de blindage présente des rainures de ventilation sur la face arrière ou bien en ce qu'il est constitué d'une tôle perforée.

8. Châssis de circuit selon l'une des revendications précédentes, caractérisé en ce que les lignes de commande RGB dirigées vers le socle de tube image sont extraites sur la face supérieure de la seconde partie de châssis et sont réalisées sous une forme particulièrement courte.

9. Châssis de circuit selon l'une des revendications précédentes, caractérisé en ce que le bloc d'alimentation du récepteur de télévision est disposé au milieu du châssis de base, en ce que, à droite ou à gauche de ce bloc, on trouve les circuits de balayage et en ce que, en face de ceux-ci, de l'autre côté, on prévoit d'installer le syntoniseur, l'amplificateur FI et les étages audio de sortie et en ce que les pistes conductrices qui conduisent le courant et le potentiel de masse vers les sous-ensembles cités, y compris les circuits dans la seconde partie de châssis, sont extraites en forme d'étoile et sans boucle.

10. Châssis de circuit selon l'une des revendications précédentes, caractérisé en ce que la partie de châssis de base est disposée horizontalement sous le tube image dans le logement ou verticalement à côté du tube image dans le logement et en ce que la seconde partie de châssis est disposée verticalement par rapport à la partie châssis de base, en saillie dans la direction du col de tube image.
